# EUROPÄISCHE PATENTSCHRIFT

(11) **EP 0 501 285 B1**
(45) Veröffentlichungstag und Bekanntmachung des Hinweises auf die Patenterteilung: **07.09.1994**
(21) Anmeldenummer: 92102702.5
(22) Anmeldetag: 18.02.1992
(51) Int. Cl.: B01J 3/04, H05B 6/80

(54) **Vorrichtung zum Auslösen und/oder Fördern chemischer und/oder physikalischer Druckreaktionen**
Apparatus for initiating and/or promoting chemical and/or physical reactions under pressure
Dispositif de déclenchement et/ou de promotion de réactions chimiques et/ou physiques sous pression

(30) Priorität: 19.02.1991 DE 4105094; 03.05.1991 DE 4114525
(43) Veröffentlichungstag der Anmeldung: 02.09.1992
(73) Patentinhaber: MLS MIKROWELLEN-LABOR-SYSTEME GmbH, D-88299 Leutkirch (DE)
(72) Erfinder: Lautenschläger, Werner, W-7970 Leutkirch (DE)
(74) Vertreter: Schmidt-Evers, Jürgen, Dipl.-Ing.

(56) Entgegenhaltungen:
- DE-A- 3 818 697
- US-A- 4 248 831
- US-A- 4 637 145

## Beschreibung

Die Erfindung betrifft eine Vorrichtung zum Auslösen und/oder Fördern chemischer und/oder physikalischer Druckreaktionen nach dem Oberbegriff des Patentanspruches 1.

Aus der DE-OS 38 18 697 ist es bekannt, für chemische und physikalische Druckreaktionen herkömmliche Mikrowellenöfen und druckfeste Behältereinsätze zu verwenden, die zur Aufnahme der Proben dienen und einzeln oder zu mehreren in den vom Gehäuse des jeweiligen Mikrowellenofens definierten Heizraum eingebracht werden. Die im Betrieb vom Mikrowellengenerator des Mikrowellenofens in dessen Heizraum emittierten Mikrowellen durchdringen die mikrowellendurchlässige, aus Kunststoff bestehende Behälterwandung und erhitzen unter entsprechendem Druckanstieg die im Behälterinneren befindliche Probe. Da die Behältereinsätze aus Kunststoff bestehen, können sie zerstörungsfrei nur bis zu Drücken von etwa 200 bar eingesetzt werden. Höhere Drücke sind jedoch, beispielsweise für Extraktionen, erwünscht, um den Siedepunkt des Lösungsmittels zu erhöhen und auf diese Weise die Extraktion bei entsprechend höherer Temperatur und dementsprechend schneller, d.h. wirtschaftlicher, durchzuführen. Druckfeste Behältereinsätze aus metallischem Werkstoff widerstehen zwar höheren Drücken sind jedoch aufgrund ihrer Eigenschaft, Mikrowellenstrahlen zu reflektieren, nicht für den Einsatz in Mikrowellenöfen geeignet.

Es ist Aufgabe der Erfindung, eine Vorrichtung der eingangs genannten Art so weiterzubilden, daß Reaktionen unter höheren Druckbedingungen und insgesamt wirtschaftlicher durchgeführt werden können.

Diese Aufgabe wird durch die kennzeichnenden Merkmale des Anspruchs 1 gelöst. Auf diese Weise wird der im Innern des Behältereinsatzes herrschende Reaktionsdruck nicht, wie bisher, vom Behältereinsatz selbst, sondern von dem Druckbehälter aufgenommen. Dieser ist für Mikrowellen undurchlässig und kann deshalb aus beispielsweise metallischem Werkstoff bestehen, der im Vergleich zu dem für die Behältereinsätze auch weiterhin erforderlichen mikrowellendurchlässigen Materialien eine erheblich höhere Festigkeit aufweist. Es können auch nichtmetallische hochdruckfeste Werkstoffe eingesetzt werden, solange sie mikrowellenundurchlässig, d.h. elektrisch und/oder magnetisch leitfähig sind. Mikrowellendurchlässiges Material ist lediglich zum Verschließen der Koppelöffnung erforderlich, deren vergleichsweise geringe Abmessung die geringere Festigkeit dieses Materials ausgleicht, so daß mit der erfindungsgemäßen Vorrichtung Druckreaktionen im Bereich von 1000 bar und mehr durchgeführt werden können.

Der Behältereinsatz kann als ein zwecks Verschließen der Koppelöffnung zumindest in deren Bereich mikrowellendurchlässiger und hochdruckfester Aufnahmebehälter ausgebildet sein. Vorzugsweise ist er als zweiteiliger Aufnahmebehälter ausgebildet, der aus einem die Proben aufnehmenden, mikrowellendurchlässigen Probenbehälter und einem diesen aufnehmenden, zwecks Verschließen der Koppelöffnung zumindest in deren Bereich mikrowellendurchlässigen und hochdruckfesten Verschlußelement besteht.

Gemäß einer weiteren Ausgestaltung ist der Behältereinsatz als ein an einen Zulauf- und einen Ablaufanschluß des Druckbehälters anschließbarer Durchflußreaktionseinsatz ausgebildet. Dieser ist zweckmäßigerweise zweiteilig mit einem zwecks Verschließen der Koppelöffnung zumindest in deren Bereich mikrowellendurchlässigen und hochdruckfesten Verschlußelement und einem in diesem angeordneten, hochdruckfesten Kernelement mit einem mit seinen beiden Enden an den Zulauf- bzw. Ablaufanschluß anschließbaren Außengewinde ausgebildet. Das Kernelement kann mikrowellendurchlässig und/oder -absorbierend sein. Im letzteren Fall wird die Probe sowohl direkt durch die durch das Verschlußelement durchtretende Mikrowellenstrahlung als auch indirekt von dem durch den absorbierten Strahlungsanteil erhitzten Kernelement erwärmt. Zur Erzielung des gleichen Effektes kann auch der Probenbehälter aus einem mikrowellenabsorbierenden Material bestehen.

Gemäß einer Weiterbildung der Erfindung sind der Aufnahmebehälter, der Durchflußreaktionseinsatz und das Verschlußelement mit Spiel in den Druckbehälter sowie das Kernelement mit Spiel in das Verschlußelement einsetzbar und unter dem Einfluß der Reaktionstemperatur bis zur satten Anlage an die Innenfläche des Druckbehälters bzw. des Verschlußelementes wärmeausdehnbar.

Vorteilhafterweise ist auch der Probenbehälter mit Spiel in das Verschlußelement einsetzbar und unter dem Einfluß des Reaktionsdruckes und/oder der Reaktionstemperatur bis zur satten Anlage an die Innenfläche des Verschlußelementes und, falls er eine größere Höhenabmessung als dieses aufweist, an die Innenfläche des Druckbehälters verformbar bzw. wärmeausdehnbar. Zweckmäßigerweise ist der Probenbehälter elastisch verformbar, wobei er aus einem Fluorpolymer oder -copolymer bestehen kann, das zugleich mikrowellendurchlässig ist.

Vorzugsweise ist der Druckbehälter mit kreiszylindrischem Querschnitt ausgebildet, um auf diese Weise auch höchsten Drücken zu widerstehen. Für Reaktionen, bei denen die Proben im unteren Bereich des Druckbehälters angeordnet sind, ist es günstig, die Koppelöffnung in der Zylinderwandung nahe der Bodenwandung des Druckbehälters auszubilden. Dabei ist es zur Erzielung möglichst hoher Temperaturen der Probe zweckmäßig, den Probenbehälter so auszubilden, daß er in seinem der Koppelöffnung bzw. dem Verschlußelement zugeordneten Wandbereich seine größte Wandstärke aufweist. Im Bereich oberhalb der Koppelöffnung, in welchem der Probenbehälter eine geringere, vorzugsweise seine geringste Wandstärke aufweist, kann eine Kühlanordnung am Druckbehälter vorgesehen sein, um beispielsweise beim Extrahieren von Proben mittels eines Behältereinsatzes in Form einer Soxhlet-Anordnung eine möglichst effektive Abkühlung des verdampften Lösungsmittels im oberen Bereich des Druckbehälters zu erzielen.

Das Verschlußelement besteht vorzugsweise aus Kunststoff- oder Keramikmaterial; seine Form ist zweckmäßigerweise die eines Rohrstücks.

Gemäß einer Weiterbildung der Erfindung ist der Druckbehälter als Resonator ausgebildet, um eine hohe Mikrowellendichte und -intensität im Inneren des Druckbehälters und damit einen hohen Wirkungsgrad zu erzielen.

Vorzugsweise sind die Abmessungen des Druckbehälters veränderbar. Dadurch können die Mikrowellendichte und/oder die Mikrowellenfrequenz, die Feldstärken und die Feld- und/oder Amplitudenverteilungen (H- und E-Wellen) auf die jeweilig durchzuführende Reaktion abgestimmt werden.

Dabei ist es zweckmäßig, den Druckbehälter lösbar am Mikrowellengenerator bzw. einem zu diesem führenden Leiter anzuschließen. Gleichfalls zweckmäßig ist der lösbare Anschluß des Leiters am Mikrowellengenerator.

Vorteilhafterweise ist im Druckbehälter zwecks Veränderung seiner Abmessungen jeweils einer von mehreren Einsätzen unterschiedlicher Abmessungen auswechselbar angeordnet. Diese Einsätze können als Rohrstücke unterschiedlicher Wandstärken ausgebildet sein. Zweckmäßigerweise kann als Einsatz das entsprechend ausgebildete Verschlußelement verwendet werden, das in diesem Fall lediglich im Bereich der Koppelöffnung mikrowellendurchlässig und ansonsten mikrowellenundurchlässig ist.

Die Einsätze können auch als Bodenplatten mit zumindest unterschiedlichen Dickenabmessungen ausgebildet sein. Es ist auch möglich, eine mittels einer Hubeinrichtung höhenbewegbar im Druckbehälter angeordnete Bodenplatte vorzusehen.

Nachstehend ist die Erfindung anhand einiger bevorzugter Ausführungsbeispiele und Ausgestaltungen unter Bezugnahme auf die Zeichnung näher beschrieben. Es zeigen:
- Fig. 1: eine erste Ausgestaltung der erfindungsgemäßen Vorrichtung in schematischer perspektivischer Darstellung,
- Fig. 2: eine zweite Ausgestaltung der erfindungsgemäßen Vorrichtung in schematischer perspektivischer Darstellung,
- Fig. 3: eine Schnittdarstellung eines Druckbehälters nach Figur 1 gemäß einem ersten Ausführungsbeispiel,
- Fig. 4: eine Schnittdarstellung eines Druckbehälters nach Figur 1 gemäß einem zweiten Ausführungsbeispiel,
- Fig. 5: eine vereinfachte Schnittdarstellung eines Druckbehälters nach Figur 1 gemäß einem dritten Ausführungsbeispiel, und
- Fig. 6: eine Schnittdarstellung der Vorrichtung nach Figur 2 mit einer geänderten Verschlußanordnung und Druckbehältern gemäß einem vierten Ausführungsbeispiel.

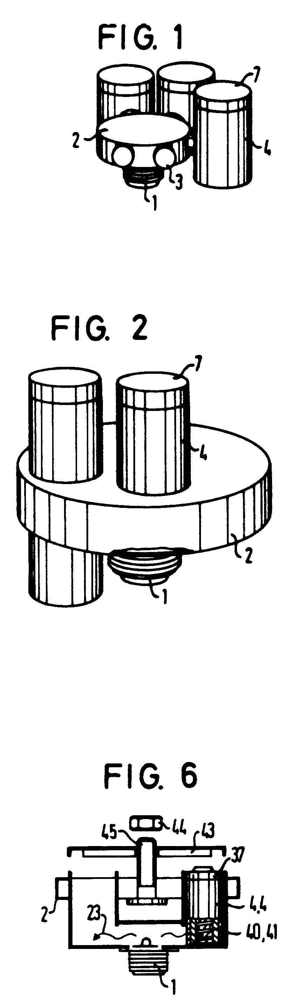

Die erfindungsgemäße Vorrichtung umfaßt für sämtliche Ausführungsbeispiele einen Mikrowellengenerator in Form eines Magnetrons 1 in herkömmlicher Ausführung mit einer Auskopplungseinrichtung 2, die eine flache kreiszylindrische Form und mehrere radial verlaufende Hohlleiter 3 aufweist, sowie eine Anzahl von Druckbehältern 4, die lösbar an den Hohlleitern 3 angeschlossen sind. Die Auskopplungseinrichtung 2 dient gleichzeitig als zentrales Halterungselement für das an seiner Unterseite befestigte Magnetron 1 und die Druckbehälter 4. Statt der Hohlleiter 3 können nicht gezeigte Koaxialkabel verwendet werden; in diesem Fall sind die Druckbehälter 4 unmittelbar an der Auskopplungseinrichtung 2 befestigt,wie dies in Fig. 2 gezeigt ist, allerdings für einen direkten, in Figur 6 im Schnitt dargestellten Anschluß ohne Leiter am Magnetron 1.

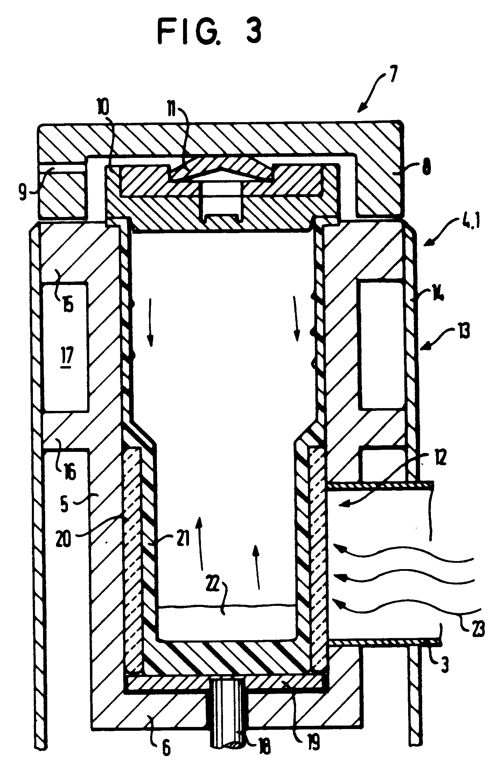

Der in Figur 3 dargestellte, mit dem Bezugszeichen 4.1 bezeichnete Druckbehälter ist von kreiszylindrischem Querschnitt, besteht aus einem hochdruckfesten metallischen Werkstoff, wie etwa Edelstahl oder Aluminium, und umfaßt eine Zylinderwandung 5, die an ihrem unteren Ende durch eine Bodenwandung 6 verschlossen ist und an ihrem oberen Ende eine durch eine Verschlußanordnung 7 druckdicht verschließbare Beschickungsöffnung aufweist. Die Verschlußanordnung 7 umfaßt einen Bajonettverschluß-Außendeckel 8 mit einer Entlüftungsbohrung 9 und einen Innendeckel 10, der bei verschlossenem Außendeckel 8 von einer sich an diesem abstützenden Spannfederanordnung 11 gegen den oberen freien Rand der Zylinderwandung 5 gedrückt wird. Im unteren, der Bodenwandung 6 benachbarten Bereich ist in der Zylinderwandung 5 eine Koppelöffnung 12 ausgebildet, an die der Hohlleiter 3 angeschlossen ist. Oberhalb der Koppelöffnung 12 befindet sich am Druckbehälter 4.1 eine Kühlanordnung 13 mit einer Buchse 14, die einen größeren Durchmesser als die Zylinderwandung 5 aufweist und an einem oberen und einem unteren Flanschvorsprung 15 bzw. 16 der Zylinderwandung 5 beispielsweise durch Verschweißung befestigt ist. Der von diesen Flanschvorsprüngen 15, 16 und der Buchse 14 definierte Raum 17 ist in nicht gezeigter Weise, beispielsweise mittels einer Schnellkupplung, an eine ebenfalls nicht dargestellte, zu einem Kühlflüssigkeitsvorrat (Wasser) und eine Kühleinrichtung von beispielsweise Kugelkühlerkonstruktion führende Leitung angeschlossen. Am oberen freien Ende einer eine zentrale Öffnung in der Bodenwandung 6 durchsetzenden Kolbenstange 18 einer nicht gezeigten Hubeinrichtung, wie etwa einem Pneumatikzylinder, ist eine Bodenplatte 19 befestigt, die bei Betätigung der Hubeinrichtung im Druckbehälter 4.1 verschiebbar und in beliebiger Höhe feststellbar ist. Die Buchse 14 erstreckt sich vom unteren Flanschvorsprung 16 über die Bodenwandung 6 hinaus nach unten, bildet dabei eine Art Gehäuse, in dem die Hubeinrichtung eingeschlossen ist.

Der Druckbehälter 4.1 ist als Resonator ausgebildet, d.h. sein Hohlraumdurchmesser und seine Hohlraumhöhe sind so gewählt und so auf die Hohlleiterabmessungen und den Frequenzbereich der vom Magnetron 1 erzeugten Mikrowellen abgestimmt, daß die für die jeweils durchzuführende Reaktion erwünschten Feldstärken sowie angestrebten Feld- und/oder Amplitudenverteilungen (H- und E-Wellen) erreicht werden können. Durch Feststellen der Kolbenstange 18 und damit der Bodenplatte 19 in entsprechender Hubhöhe innerhalb des Druckbehälters 4.1 kann die Hohlraumhöhe verändert und damit der Resonator abgestimmt werden; gegebenenfalls ist der Hohlleiter 3 gegen einen Hohlleiter anderer Abmessungen auszutauschen und/oder eine Mikrowellenstrahlung anderer Frequenz einzukoppeln. Falls keine Hubeinrichtung vorhanden ist, kann statt der Bodenplatte 19 eine von mehreren Bodenplatten unterschiedlicher Dickenabmessungen auswechselbar im Druckbehälter 4.1 angeordnet sein.

Ein Behältereinsatz in Form eines zweiteiligen Aufnahmebehälters bestehend aus einem Verschlußelement 20 und einem in diesem entfernbar angeordneten Probenbehälter 21 zur Aufnahme einer Probe 22 ist entfernbar im Druckbehälter 4.1 angeordnet. Das Verschlußelement 20 in Form eines Rohrstücks besteht aus mikrowellendurchlässigem und hochdruckfestem Werkstoff, wie z.B. einem entsprechenden Kunststoff- oder Keramikmaterial, und dient zum druckfesten Verschließen der Koppelöffnung 12; dementsprechend erstreckt es sich mit dem erforderlichen Überstand lediglich im Bereich dieser Koppelöffnung 12.

Der Probenbehälter 21 besteht aus einem elastisch verformbaren, mikrowellendurchlässigen Kunststoffmaterial, vorzugsweise PTFE, und weist im Bereich des Verschlußelementes 20 seine größte Wandstärke und im Bereich der Kühlanordnung 13 seine geringste Wandstärke auf. Die Höhenabmessung des Probenbehälters ist etwas größer als diejenige der Zylinderwandung 5 des Druckbehälters 4.1.

Der Probenbehälter 21 ist in das Verschlußelement 20 und zusammen mit diesem durch die Beschickungsöffnung hindurch in den Druckbehälter 4.1 mit Spiel einsetzbar. Dabei sind die Abmessungen und die verwendeten Werkstoffe des Aufnahmebehälters so gewählt, daß das Verschlußelement 20 unter dem Einfluß der Reaktionstemperatur bis zur satten Anlage an die Innenfläche der Zylinderwandung 5 des Druckbehälters 4.1 wärmeausdehnbar und der Probenbehälter 21 unter dem Einfluß des Reaktionsdruckes und der Reaktionstemperatur bis zur satten Anlage an die Innenfläche der Zylinderwandung 5 bzw. des Verschlußelementes 20 elastisch verformbar und wärmeausdehnbar ist.

Bei Verwendung mehrerer Verschlußelemente, die lediglich im Bereich der Koppelöffnung mikrowellendurchlässig und ansonsten durch z.B. eine metallische Beschichtung an ihrer Innenfläche mikrowellenundurchlässig sind und unterschiedliche Wandstärken und gegebenenfalls unterschiedliche Höhenabmessungen aufweisen, kann immer dasjenige Verschlußelement 20 in den Druckbehälter 4.1 eingesetzt werden, welches dessen Hohlraumdurchmesser und damit dessen Resonatoreigenschaften auf die jeweilig durchzuführende Reaktion abstimmt.

Der vorstehend beschriebene Druckbehälter 4.1 ist zur Durchführung von beispielsweise Druckaufschlüssen vorgesehen. Zu diesem Zweck wird nach Verfahren der Bodenplatte 19 mittels der Hubeinrichtung bis in eine angehobene Beschickungsposition das Verschlußelement 20, gegebenenfalls mit der für die Abstimmung der Resonatoreigenschaften des Druckbehälters 4.1 auf den durchzuführenden Druckaufschluß erforderlichen Wandstärke, in den Druckbehälter 4.1 und sodann der mit der Probe 22 beschickte Probenbehälter 21 in das Verschlußelement 20 bzw. den Druckbehälter 4.1 eingesetzt. Anschließend erfolgt das Absenken der Bodenplatte 19 und damit des Aufnahmebehälters 20, 21 bis in diejenige Arbeitsposition, im vorliegenden Ausführungsbeispiel die in Figur 3 gezeigte, die der für die Abstimmung der Resonatoreigenschaften des Druckbehälters 4.1 auf den durchzuführenden Druckaufschluß erforderlichen Hubhöhe entspricht. Schließlich wird der Druckbehälter 4.1 mittels der Verschlußanordnung 7 in bekannter Weise verschlossen. Dabei dient der über die Zylinderwandung 5 überstehende und über dessen freien Rand nach außen umgeschlagene Teil des Probenbehälters 21 als Dichtung.

Nach Einschalten des Magnetrons werden die von demselben erzeugten Mikrowellen 23 durch den Hohlleiter 3 und die Koppelöffnung 12 in den Druckbehälter 4.1 eingekoppelt, um nach Durchtritt durch das Verschlußelement 20 und den Probenbehälter 21 die Probe 22 und die im Innern des Druckbehälters 4.1 befindliche Luft mit dem für den Aufschluß erforderlichen Sauerstoff unter Druckanstieg zu erwarmen. Die hohe Mikrowellendichte im Innern des Druckbehälters 4.1 sorgt für einen schnellen Temperatur- und Druckanstieg bis auf höchste Werte. Ersterer ist dafür verantwortlich, daß sich das Verschlußelement 20 ausdehnt und sich dabei satt und somit druckabdichtend an die Innenfläche der Zylinderwandung 5 des Druckbehälters 4.1 anlegt. Gleiches gilt für den Probenbehälter 21, der sich jedoch vor allem durch den Druckanstieg elastisch verformt und somit satt an die Innenfläche der Zylinderwandung 5 anlegt; auf diese Weise wird der Druck im Inneren des Probenbehälters 21 vom Druckbehälter 4.1 aufgenommen.

Unter den vorbeschriebenen Reaktionsbedingungen reagiert der Luftsauerstoff durch Bindungsspaltung und Bindungsneubildung, wobei freie Radikale entstehen, die sich mit der Probe verbinden, so daß diese oxydiert, d.h. aufgeschlossen wird. Dabei entstehende gasförmige Produkte kondensieren an der der Kühlanordnung 13 zugeordneten Innenfläche der Zylinderwandung 5 und werden der Reaktion erneut zugeführt. Nach Beendigung des Aufschlusses und entsprechende Abkühlung wird der Druckbehälter 4.1 durch Entfernen der Verschlußanordnung 7 geöffnet und der Aufnahmebehälter 20, 21 durch Anheben der Bodenplatte 19 bis in die Beschickungsposition verfahren, um sodann entnommen zu werden. Die Reaktionsprodukte des Aufschlusses können sodann in einem nachfolgenden physikalischen Trennverfahren voneinander getrennt werden.

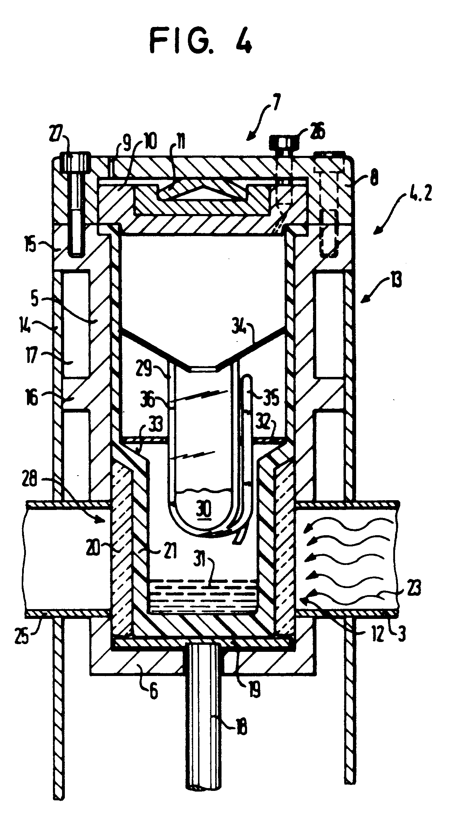

Der in Figur 4 dargestellte, mit dem Bezugszeichen 4.2 bezeichnete Druckbehälter entspricht grundsätzlich demjenigen nach Figur 3 und unterscheidet sich von diesem lediglich dadurch, daß er einen Anschluß 25 für einen nicht gezeigten Temperatursensor sowie einen Anschluß 26 für einen ebenfalls nicht gezeigten Drucksensor aufweist, und daß der Bajonettverschluß-Außendeckel 8 zusätzlich mittels Schrauben 27 an der Zylinderwandung 5 befestigt werden kann. Der Anschluß 25 für den Temperatursensor mündet über eine der Koppelöffnung 12 gegenüberliegende und ebenso wie diese durch das Verschlußelement 20 abgedichtete Öffnung 28 der Zylinderwandung 5 in den Druckbehälter 4.2 ein. Der Anschluß 26 für den Drucksensor ist in der Verschlußanordnung 7 ausgebildet.

Der Druckbehälter 24 ist zur Durchführung von Extraktionen mittels einer Soxhlet-Anordnung vorgesehen.

Diese umfaßt die Kühlanordnung 13 und einen Extraktor, der aus einem zylindrischen Glaseinsatz 29 zur Aufnahme einer zu extrahierenden Probe 30 und dem unteren Teil des Probenbehälters 20 zur Aufnahme eines Lösungsmittels 31 besteht. Der Glaseinsatz 29 ist auf etwa halber Höhe mit einem Ringflansch 32 versehen, der nicht gezeigte Durchgangsbohrungen aufweist und sich an der umlaufenden, vom freien oberen Rand des Verschlußelementes 20 gebildeten Stufe 33 abstützt. An den oberen freien Rand des Glaseinsatzes 29 schließt sich ein nach oben divergierender Trichter 34 an, der ebenfalls nicht gezeigte Durchgangsbohrungen aufweist und sich bis zur satten Anlage an den Probenbehälter 21 erstreckt. Ein an den Glaseinsatz 29 in dessen oberen Bereich angeschlossenes Überlaufrohr 35 erstreckt sich durch den Ringflansch 32 hindurch bis in den oberen Bereich des unteren, das Lösungsmittel 31 aufnehmenden Teils des Probenbehälters 21. Eine sogenannte Fritte 36 aus PTFE ist in bekannter Weise entfernbar im Glaseinsatz 29 angeordnet.

Nach Einbringen des das Lösungsmittel 31 enthaltenden Aufnahmebehälters 20, 21 in der vorbeschriebenen Weise in den Druckbehälter 4.2 wird die die zu extrahierende Probe 30 enthaltende Fritte 36 in den Glaseinsatz 29 eingeschoben und dieser sodann in den Aufnahmebehälter 20, 21 so eingesetzt, daß sich sein Ringflansch 32 an der Stufe 33 abstützt und der Trichter 34 satt am Probenbehälter 21 anliegt. Anschließend wird der Druckbehälter 4.2 mittels der Verschlußanordnung 7 in der ebenfalls bereits beschriebenen Weise verschlossen und der Anschluß 26 für den Drucksensor an eine nicht gezeigte Leitung angeschlossen, die zu einer nicht gezeigten Regeleinrichtung des Magnetrons 1 führt. Der Anschluß 25 für den Temperatursensor ist ebenfalls in nicht gezeiger Weise an diese Regeleinrichtung angeschlossen.

Nach Einschalten des Magnetrons 1 gelangen die von diesem emittierten Mikrowellen 23 in der bereits beschriebenen Weise zum Lösungsmittel 31, um dieses zu erwärmen. Falls das Lösungsmittel ein unpolares Lösungsmittel ist, kann der Probenbehälter 21 aus einem mikrowellenabsorbierenden Material bestehen, welches die in ihm durch die absorbierten Mikrowellen 23 erzeugte Wärme an das Lösungsmittel abgibt, welches unter Druckanstieg zu sieden beginnt.

Der sich entwickelnde Lösungsmitteldampf steigt nach oben und tritt durch die Durchgangsbohrungen im Ringflansch 32 und im Trichter 34 hindurch, kondensiert an der durch die Kühlanordnung 13 gekühlten Innenfläche des Probenbehälters 21 oberhalb des Trichters 34 und tropft über diesen in den Glaseinsatz 29 hinein. Dort löst es den zu extrahierenden Stoff aus der Probe 30 heraus und läuft bei Überschreiten des Überlaufrohr-Niveaus automatisch über das Überlaufrohr 35 in den unteren Teil des Probenbehälters 21 zurück, um dort erneut zu verdampfen. Da dieser Kreislauf automatisch immerwieder abläuft und nur reines Lösungsmittel verdampft, kommt es zu einer fortlaufenden Anreicherung des gelösten Stoffes im unteren Teil des Probenbehälters 21. Mit Hilfe des nicht gezeigten Drucksensors und des ebenfalls nicht gezeigten Temperatursensors werden Druck und Temperatur im Druckbehälter 4.2 ständig überwacht und bei Überschreiten eines maximal zulässigen Wertes die Leistung des Magnetrons 1 entsprechend reduziert. Nach Beendigung der Extraktion kann im Vakuum aufkonzentriert werden.

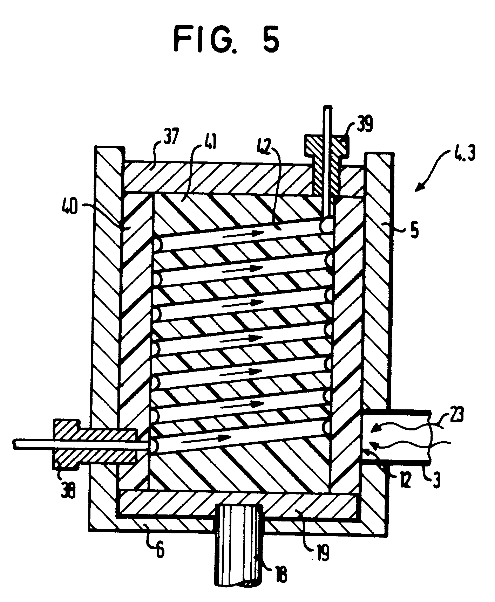

Der in Figur 5 vereinfacht dargestellte, mit dem Bezugszeichen 4.3 bezeichnete Druckbehälter ist von gleicher Form und aus gleichem Werkstoff wie die Druckbehälter nach den Figuren 3 und 4 und ebenfalls als Resonator ausgebildet. Er umfaßt ebenfalls die Zylinderwandung 5, die Bodenwandung 6, die Bodenplatte 19 mit der Kolbenstange 18 der nicht gezeigten Hubeinrichtung, die an den Hohlleiter 3 angeschlossene Koppelöffnung 12 sowie einen Deckel 37, der im Betrieb durch eine in Figur 6 gezeigte Spanneinrichtung auf den freien oberen Rand des als Durchflußreaktionseinsatz ausgebildeten Behältereinsatzes gedrückt wird. Im unteren Bereich der Zylinderwandung 5 nahe der Bodenwandung 6 ist ein der Koppelöffnung 12 gegenüberliegender Zulaufanschluß 38 für die der Durchflußreaktion zu unterwerfende Probe ausgebildet. Der entsprechende Ablaufanschluß 39 befindet sich im Deckel 37.

Der Durchflußreaktionseinsatz umfaßt ein Verschlußelement 40 in Form eines Rohrstücks und ein in diesem angeordnetes Kernelement 41, die beide aus mikrowellendurchlässigem, hochdruckfestem Kunststoff- oder Keramikmaterial bestehen und sich über die Gesamthöhe des Druckbehälter-Innenraums erstrecken. Das Kernelement 41 ist mit einem Außengewinde 42 versehen, das mit beiden Enden am Zulauf- und Ablaufanschluß 38, 39 endet, wenn der Durchflußreaktionseinsatz 40, 41 in den Druckbehälter 4.3 eingesetzt ist (siehe Figur 5). Das Verschlußelement 40 dient somit nicht nur zum druckdichten Verschließen der Koppelöffnung 12, sondern auch dazu, im Zusammenwirken mit dem Gewinde 42 des Kernelementes 41 einen Durchflußkanal zu definieren.

Der Durchflußreaktionseinsatz ist in gleicher Weise wie die Aufnahmebehälter nach den Figuren 3 und 4 in den Druckbehälter 4.3 mit Spiel einsetzbar und legt sich unter dem Einfluß der Reaktionstemperatur satt an die Innenfläche der Zylinderwandung 5 an; durch den gleichen Effekt wird das Kernelement 41 während der Reaktion in satter Anlage an der Innenfläche des Verschlußelementes 40 gehalten. Der Druck, der während einer Durchflußreaktion, d.h. beim Durchströmen der flüssigen Probe durch den vom Gewinde 42 gebildeten Durchflußkanal, auftritt, wird nicht vom Durchflußreaktionseinsatz, sondern vom Druckbehälter 4.3 aufgenommen.

Die erfindungsgemäße Vorrichtung nach Figur 6 unterscheidet sich von derjenigen nach Figur 1 dadurch, daß sie keine Hohlleiter aufweist und zur Aufnahme von Druckbehältern 4.4 vorgesehen ist, die im wesentlichen identisch mit dem Druckbehälter nach Figur 5 sind, allerdings keine bewegbare Bodenplatte und damit keine Hubeinrichtung aufweisen. Die Druckbehälter 4.4 sind direkt an das Magnetron 1 angeschlossen. Die bereits bei der Beschreibung von Figur 5 erwähnte Spanneinrichtung umfaßt einen Spanndeckel 43, der durch Aufschrauben einer Mutter 44 auf eine zentral angeordnete, an der Auskopplungseinrichtung 2 verankerte Kopfschraube 45 gegen sämtliche Deckel 37 angepreßt werden kann.

## Patentansprüche

1. Vorrichtung zur Durchführung chemischer und physikalischer Druckreaktionen an Proben durch Einwirkung von Mikrowellen, mit die Proben aufnehmenden, zumindest teilweise mikrowellendurchlässigen Behältereinsätzen, die in einer über wenigstens eine Koppelöffnung an einen Mikrowellengenerator angeschlossenen, mikrowellenundurchlässigen Gehäuseanordnung angeordnet sind,
**dadurch gekennzeichnet,**
daß die Gehäuseanordnung wenigstens einen Druckbehälter (4) aus bis über 200 bar hochdruckfestem Werkstoff umfaßt, dessen Koppelöffnung (12) mikrowellendurchlässig sowie hochdruckfest verschlossen ist, und daß im Druckbehälter (4), an dessen Innenfläche satt anliegend, ein einzelner Behältereinsatz angeordnet ist.

2. Vorrichtung nach Anspruch 1,
**dadurch gekennzeichnet,**
daß der Behältereinsatz als ein zwecks Verschließen der Koppelöffnung (12) zumindest in deren Bereich mikrowellendurchlässiger und hochdruckfester Aufnahmebehälter (4.1, 4.2) ausgebildet ist.

3. Vorrichtung nach Anspruch 1 oder 2,
**dadurch gekennzeichnet,**
daß der Behältereinsatz als zweiteiliger Aufnahmebehälter bestehend aus einem die Proben (22, 30, 31) aufnehmenden, zumindest teilweise mikrowellendurchlässigen Probenbehälter (21) und einem diesen aufnehmenden, zwecks Verschließen der Koppelöffnung (12) zumindest in deren Bereich mikrowellendurchlässigen und hochdruckfesten Verschlußelement (20) ausgebildet ist.

4. Vorrichtung nach Anspruch 1,
**dadurch gekennzeichnet,**
daß der Behältereinsatz als ein an einen Zulauf- und einen Ablaufanschluß (38, 39) des Druckbehälters (4.3) anschließbarer Durchflußreaktionseinsatz (40, 41) ausgebildet ist.

5. Vorrichtung nach Anspruch 4,
**dadurch gekennzeichnet,**
daß der Durchflußreaktionseinsatz zweiteilig mit einem zwecks Verschließen der Koppelöffnung (12) zumindest in deren Bereich mikrowellendurchlässigen und hochdruckfesten Verschlußelement (40) und einem in diesem angeordneten, hochdruckfesten Kernelement (41) mit einem mit seinen beiden Enden an den Zulauf- bzw. Ablaufanschluß (38, 39) anschließbaren Außengewinde (42) ausgebildet ist.

6. Vorrichtung nach Anspruch 3 oder 5,
**dadurch gekennzeichnet,**
daß der Probenbehälter (21) und das Kernelement (41) mit Spiel in das Verschlußelement (21; 40) und letzteres mit Spiel in den Druckbehälter (4.1, 4.2; 4.3, 4.4) einsetzbar sind und sich unter dem Einfluß der Reaktionsbedingungen an die Innenfläche des Verschlußelements (21; 40) bzw. des Druckbehälters (4) anlegen.

7. Vorrichtung nach Anspruch 3,
**dadurch gekennzeichnet,**
daß der Probenbehälter (21) eine größere Höhenabmessung als das Verschlußelement (20) aufweist und sich mit seinem über letzteres überstehenden Teil unter dem Einfluß der Reaktionsbedingungen an die Innenfläche des Druckbehälters (4.1, 4.2) anlegt.

8. Vorrichtung nach wenigstens einem der Ansprüche 3, 6 und 7,
**dadurch gekennzeichnet,**
daß der Probenbehälter (21) elastisch verformbar ist.

9. Vorrichtung nach wenigstens einem der Ansprüche 3 und 6-8,
**dadurch gekennzeichnet,**
daß der Probenbehälter (21) in seinem der Koppelöffnung (12) bzw. dem Verschlußelement (20) zugeordneten Wandbereich seine größte Wandstärke aufweist.

10. Vorrichtung nach wenigstens einem der vorhergehenden Ansprüche,
**dadurch gekennzeichnet,**
daß der Druckbehälter (4.1, 4.2) im Bereich oberhalb der Koppelöffnung (12) eine Kühlanordnung (13) aufweist.

11. Vorrichtung nach wenigstens einem der vorhergehenden Ansprüche,
**dadurch gekennzeichnet,**
daß der Druckbehälter (4) als Resonator ausgebildet ist.

12. Vorrichtung nach wenigstens einem der vorhergehenden Ansprüche,
**dadurch gekennzeichnet,**
daß die Abmessungen des Druckbehälters (4) veränderbar sind.

13. Vorrichtung nach wenigstens einem der vorhergehenden Ansprüche,
**dadurch gekennzeichnet,**
daß im Druckbehälter (4) jeweils einer von mehreren Einsätzen unterschiedlicher Abmessungen auswechselbar angeordnet ist.

14. Vorrichtung nach Anspruch 13,
**dadurch gekennzeichnet,**
daß das Verschlußelement (20, 40) zugleich als Einsatz ausgebildet ist.

15. Vorrichtung nach Anspruch 13,
**dadurch gekennzeichnet,**
daß die Einsätze als Bodenplatten mit zumindest unterschiedlichen Dickenabmessungen ausgebildet sind.

16. Vorrichtung nach wenigstens einem der Ansprüche 12-15,
**gekennzeichnet durch** eine mittels einer Hubeinrichtung (18) im Druckbehälter (4.1, 4.2, 4.3) höhenbewegbar angeordnete Bodenplatte (19).

## Claims

1. Apparatus for performing chemical and physical pressure reactions on samples by the action of microwaves, comprising container inserts to receive the samples, which inserts are at least partially microwave-permeable and are arranged in a microwave-impermeable housing means connected via at least one coupling opening to a microwave generator, characterised in that,
the housing means includes at least one pressure vessel (4) of high-pressure - up to above 200 bar - resistant material whose coupling opening (12) is microwave-permeable and sealed in a high-pressure resistant manner, and that a single container insert is arranged in the pressure vessel (4) fitting closely against its inner surface.

2. Apparatus according to claim 1,
characterised in that,
the container insert is formed as a receptacle (4.1, 4.2) which for the purpose of closing the coupling opening (12) is microwave-permeable and high-pressure resistant at least in the region of the coupling opening.

3. Apparatus according to claim 1 or 2,
characterised in that,
the container insert is formed as a two-part receptacle consisting of an at least partially microwave-permeable sample container (21) to receive the samples (22, 30, 31), and a closure element (20) which for the purpose of closing the coupling opening (12) is microwave-permeable and high-pressure resistant at least in the region of the coupling opening, and receives the sample container.

4. Apparatus according to claim 1,
characterised in that,
the container insert is formed as a through-flow reactor insert (40, 41) that can be connected to an inlet and an outlet connection (38, 39) of the pressure vessel (4.3).

5. Apparatus according to claim 4,
characterised in that,
the through-flow reactor insert is made in two parts, comprising a closure element (40) which for the purpose of closing the coupling opening (12) is microwave-permeable and high-pressure resistant at least in the region of the coupling opening, and a high-pressure resistant core element (41) arranged in this closure element and having an external screw thread (42) that can be connected at its two ends to the inlet and outlet connections (38, 39) respectively.

6. Apparatus according to claim 3 or 5,
characterised in that,
the sample container (21) and the core element (41) can be inserted with play into the closure element (21; 40), and the latter can be inserted with play into the pressure vessel (4.1, 4.2; 4.3, 4.4), the sample container and the closure element fitting against the inner surface of the closure element (21; 40), and the closure element fitting against the inner surface of the pressure vessel (4), under the influence of the reaction conditions.

7. Apparatus according to claim 3,
characterised in that,
the sample container (21) is greater in height than the closure element (20), and with its part projecting above the closure element fits against the inner surface of the pressure vessel (4.1, 4.2) under the influence of the reaction conditions.

8. Apparatus according to at least one of claims 3, 6 and 7,
characterised in that,
the sample container (21) is elastically deformable.

9. Apparatus according to at least one of claims 3 and 6 to 8,
characterised in that,
the sample container (21) has its greatest wall thickness in its wall region associated with the coupling opening (12) or the closure element (20).

10. Apparatus according to any preceding claim,
characterised in that,
the pressure vessel (4.1, 4.2) has cooling means (13) in the region above the coupling opening (12).

11. Apparatus according to any preceding claim,
characterised in that,
the pressure vessel (4) is formed as a resonator.

12. Apparatus according to any preceding claim,
characterised in that,
the dimensions of the pressure vessel (4) can be changed.

13. Apparatus according to any preceding claim 1,
characterised in that,
in each case one of a plurality of inserts of different dimensions is arranged interchangeably in the pressure vessel (4).

14. Apparatus according to claim 13,
characterised in that,
the closure element (20, 40) is at the same time formed as an insert.

15. Apparatus according to claim 13,
characterised in that,
the inserts are formed as base plates which differ at least in their thicknesses.

16. Apparatus according to at least one of claims 12 to 15,
characterised by a base plate (19) arranged in the pressure vessel (4.1, 4.2, 4.3) to be adjustable in height by means of a lifting device (18).

## Revendications

1. Dispositif pour effectuer des réactions chimiques et physiques sous pression sur des échantillons par l'action de micro-ondes, comprenant des inserts de récipient au moins partiellement perméables aux micro-ondes, qui reçoivent les échantillons et sont disposés dans un agencement d'enveloppe perméable aux micro-ondes, raccordé par au moins une ouverture de couplage à un générateur de micro-ondes, *caractérisé par le fait*
que l'agencement d'enveloppe comprend au moins un récipient de pression (4) en un matériau résistant aux hautes pressions jusqu'au-dessus de 200 bars, dont l'ouverture de couplage (12) est obturée de façon perméable aux micro-ondes ainsi que de façon résistante aux hautes pressions, et qu'un unique insert de récipient est disposé dans le récipient de pression (4), en étant appliqué étroitement contre la surface intérieure de ce dernier.

2. Dispositif suivant la revendication 1,
*caractérisé par le fait*
que l'insert de récipient est réalisé sous la forme d'un récipient de réception (4.1, 4.2) résistant aux hautes pressions et perméable aux micro-ondes au moins dans la zone de l'ouverture de couplage (12) en vue de l'obturation de cette dernière.

3. Dispositif suivant la revendication 1 ou 2,
*caractérisé par le fait*
que l'insert de récipient est réalisé sous forme de récipient de réception en deux parties composé d'un récipient d'échantillons (21) au moins partiellement perméable aux micro-ondes, recevant les échantillons (22, 30, 31), et d'un élément de fermeture (20) recevant ledit récipient et réalisé de façon résistante aux hautes pressions et perméable aux micro-ondes au moins dans la zone de l'ouverture de couplage (12), en vue de l'obturation de cette dernière.

4. Dispositif suivant la revendication 1,
*caractérisé par le fait*
que l'insert de récipient est réalisé sous la forme d'un insert de réaction continue (40, 41) pouvant être raccordé à un raccord d'arrivée et un raccord de départ (38, 39) du récipient de pression (4.3).

5. Dispositif suivant la revendication 4,
*caractérisé par le fait*
que l'insert de réaction continue est réalisé en deux parties avec un élément de fermeture (40) résistant aux hautes pressions et perméable aux micro-ondes au moins dans la zone de l'ouverture de couplage (12), en vue de l'obturation de cette dernière, et un élément de noyau (41) résistant aux hautes pressions, disposé dans l'élément de fermeture et présentant un filetage extérieur (42) pouvant être raccordé à ses deux extrémités aux raccords d'arrivée et de départ (38, 39).

6. Dispositif suivant la revendication 3 ou 5,
*caractérisé par le fait*
que le récipient d'échantillons (21) et l'élément de noyau (41) peuvent être insérés avec du jeu dans l'élément de fermeture (21, 40) et ce dernier avec du jeu dans le récipient de pression (4.1, 4.2; 4.3, 4.4) et s'appliquent, sous l'action des conditions de la réaction, contre la surface intérieure respectivement de l'élément de fermeture (21; 40) et du récipient de pression (4).

7. Dispositif suivant la revendication 3,
*caractérisé par le fait*
que le récipient d'échantillons (21) présente une hauteur plus importante que l'élément de fermeture (20) et s'applique, par sa partie dépassant ce dernier, sous l'action des conditions de la réaction, contre la surface intérieure du récipient de pression (4.1, 4.2).

8. Dispositif suivant au moins l'une des revendications 3, 6 et 7,
*caractérisé par le fait*
que le récipient d'échantillons (21) est élastiquement déformable.

9. Dispositif suivant au moins l'une des revendications 3 et 6-8,
*caractérisé par le fait*
que le récipient d'échantillons (21) présente sa plus grande épaisseur de paroi dans sa zone de paroi associée à l'ouverture de couplage (12) ou à l'élément de fermeture (20).

10. Dispositif suivant au moins l'une des revendications précédentes,
*caractérisé par le fait*
que le récipient de pression (4.1, 4.2) présente un agencement de refroidissement (13) dans la zone située au-dessus de l'ouverture de couplage (12).

11. Dispositif suivant au moins l'une des revendications précédentes,
c*aractérisé par le fait*
que le récipient de pression (4) est réalisé sous forme de résonateur.

12. Dispositif suivant au moins l'une des revendications précédentes,
*caractérisé par le fait*
que les dimensions du récipient de pression (4) sont modifiables.

13. Dispositif suivant au moins l'une des revendications précédentes,
*caractérisé par le fait*
qu'un parmi plusieurs inserts de dimensions différentes est disposé de façon échangeable dans le récipient de pression (4).

14. Dispositif suivant la revendication 13,
*caractérisé par le fait*
que l'élément de fermeture (20, 40) est réalisé simultanément comme insert.

15. Dispositif suivant la revendication 13,
*caractérisé par le fait*
que les inserts sont réalisés sous forme de plaques de fond ayant au moins des dimensions différentes en épaisseur.

16. Dispositif suivant au moins l'une des revendications 12 à 15,
*caractérisé* par une plaque de fond (19) disposée dans le récipient de pression (4.1, 4.2, 4.3) de façon mobile en hauteur au moyen d'un dispositif élévateur (18).
